# EUROPÄISCHE PATENTSCHRIFT

(11) **EP 3 424 694 B1**
(45) Veröffentlichungstag und Bekanntmachung des Hinweises auf die Patenterteilung: **13.05.2020**
(21) Anmeldenummer: 18163526.9
(22) Anmeldetag: 23.03.2018
(51) Int. Cl.: B29D 30/00, B29D 30/06, B29C 33/58

(54) **VORRICHTUNG UND VERFAHREN ZUR SPRÜHBEHANDLUNG ODER ELEKTRONENSTRAHLBEHANDLUNG VON ROHREIFEN**
DEVICE AND METHOD FOR THE SPRAY TREATMENT OR ELECTRON BEAM TREATMENT OF RAW TYRES
DISPOSITIF ET PROCÉDÉ DE TRAITEMENT PAR PULVÉRISATION OU DE TRAITEMENT PAR FAISCEAU D'ÉLECTRONS DES PNEUMATIQUES BRUTS

(30) Priorität: 21.06.2017 DE 102017210333
(43) Veröffentlichungstag der Anmeldung: 09.01.2019
(73) Patentinhaber: Continental Reifen Deutschland GmbH, 30165 Hannover (DE)
(72) Erfinder: Reitmann, Sebastian, 31558 Hagenburg (DE); Lohner, Alexander, 30851 Langenhagen (DE); Gerighausen, Martin, 30890 Barsinghausen (DE)
(74) Vertreter: Finger, Karsten

(56) Entgegenhaltungen:
- EP-A1- 1 489 026
- WO-A1-2006/128969
- US-A1- 2015 042 001

## Beschreibung

Die Erfindung betrifft eine Vorrichtung und ein Verfahren zur Sprühbehandlung oder Elektronenstrahlbehandlung von Rohreifen.

Bei der Reifenherstellung ist es bekannt, Rohreifen vor ihrer Vulkanisation oberflächlich vorzubehandeln. Dabei ist es üblich, die Rohreifen in eine Behandlungskammer einzuschleusen und auf die Rohreifen ein Trennmittel aufzusprühen. Ferner kann die Behandlungskammer als ein Strahlenschutzgehäuse ausgeführt sein, in welchem die aus Kautschukmischungen bestehenden Bauteile der Rohreifen mittels Elektronenstrahlen oberflächlich vorvernetzt werden. Diese Maßnahmen erleichtern das Entformen der Reifen aus der Vulkanisationsform nach erfolgter Vulkanisation.

Eine Vorrichtung und ein Verfahren zur Elektronenstrahlbehandlung von Rohreifen sind beispielsweise aus der DE 10 2015 221 511 A1 bekannt. Die Vorrichtung umfasst eine Behandlungskammer, an welcher an gegenüberliegenden Seiten eine Eingangsschleuse und eine Ausgangsschleuse angrenzen. Ferner grenzt an die Behandlungskammer eine Bestrahlungsquelle zum Vorvernetzen der Rohreifen innerhalb der Behandlungskammer an. Das Handling der Rohreifen innerhalb der Behandlungskammer erfolgt mittels einer drehbar angeordneten Greifeinrichtung, welche die Reifen von oben erfasst.

Die Handhabung der Rohreifen innerhalb der bekannten Behandlungskammern ist verbesserungsbedürftig. Vor allem dem Transport der Rohreifen in die Behandlungskammer sowie innerhalb der Behandlungskammer kommt große Bedeutung zu, da die Rohreifen häufig, bedingt durch Lagerung und liegenden Transport, einseitig eingefallen und demensprechend die Wulstkerne nicht mehr parallel zueinander ausgerichtet sind. Die Übergabe an eine in der Behandlungskammer befindliche Handlingeinrichtung, beispielsweise eine Greifeinrichtung, ist daher problematisch. Insbesondere neigen die von der Greifeinrichtung aufgenommen Rohreifen zum Taumeln und können von der Greifeinrichtung herunterfallen oder verrutschen, sodass die Behandlung der Rohreifen nicht auf reproduzierbare Weise erfolgt, Produktionsausfälle eintreten sowie die Vorrichtung möglicherweise beschädigt wird. Die Behandlungskammer ist zudem häufig schwer einsehbar, insbesondere wenn ein Vorvernetzen mittels Elektronenstrahlen vorgesehen ist und die Behandlungskammer daher ein Strahlenschutzgehäuse ist. Eine visuelle Überwachung der Vorrichtung ist daher mitunter erschwert.

Der Erfindung liegt die Aufgabe zu Grunde, eine Vorrichtung und ein Verfahren zur Verfügung zu stellen, welche auf eine robuste, einfache und prozesssichere Weise gestatten, Rohreifen in eine Behandlungskammer und innerhalb der Bestrahlungskammer zu befördern.

Was die Vorrichtung betrifft, wird die gestellte Aufgabe erfindungsgemäß gelöst durch eine Vorrichtung, welche umfasst:
- eine Behandlungskammer mit einer Sprüheinrichtung oder einer Elektronenstrahlquelle,
- eine umlaufende Fördereinrichtung zum Einbringen von auf Paletten waagrecht aufgespannten Rohreifen in die Behandlungskammer und zum Rücktransport von leeren Paletten, wobei jede Palette eine Spanneinrichtung aufweist, mittels welcher Rohreifen unterschiedlicher Reifendimensionen in übereinstimmenden Höhenpositionen gegenüber der Palette an der Innenseite ihrer oben liegenden Wulstbereiche erfassbar sind,
- eine Abtransporteinrichtung zum Abtransport behandelter Rohreifen aus der Behandlungskammer,
- eine in der Behandlungskammer angeordnete Hubeinrichtung zum Anheben und nachfolgendem Absenken der Paletten,
- eine in der Behandlungskammer angeordnete Greifeinrichtung mit zumindest einer Handhabungseinheit,
   mittels welcher ein auf einer angehobenen Palette aufgespannter Rohreifen an der Innenseite seines oben liegenden Wulstbereiches erfassbar und derart von den Paletten abnehmbar ist und
   mittels welcher nachfolgend der Rohreifen in Rotationsbewegung versetzbar, vor eine Sprüheinrichtung bzw. eine Elektronenstrahlquelle bringbar und nach der Besprühung bzw. Bestrahlung auf die Abtransporteinrichtung absetzbar ist.

Im Hinblick auf das Verfahren wird die gestellte Aufgabe mit folgenden nacheinander ablaufenden Schritten gelöst:
a. Aufspannen eines Rohreifens auf einer Palette derart, dass der Rohreifen unabhängig von seiner Reifendimension in einer definierten Höhenpositionen gegenüber der Palette an der Innenseite seines oben liegenden Wulstbereiches erfasst wird,
b. Einbringen der Palette mit einem aufgespannten Rohreifen in eine Behandlungskammer,
c. Anheben der Palette mit einer Hubeinrichtung,
d. Abnehmen des Rohreifens von der angehobenen Palette mit einer Greifeinrichtung, von welcher der Rohreifen an der Innenseite seines oben liegenden Wulstbereiches erfasst wird,
e. Absenken der Hubeinrichtung und Absetzen der leeren Palette sowie Verfahren der Greifeinrichtung mitsamt dem Rohreifen vor die Sprüheinrichtung bzw. die Elektronenstrahlquelle, wobei der Rohreifen (8) in Rotationsbewegung versetzt wird,
f. Besprühen bzw. Bestrahlen des rotierenden Rohreifens und Rücktransport der leeren Palette,
g. Abladen des besprühten bzw. vorvernetzten Rohreifens von der Greifeinrichtung auf eine Abtransporteinrichtung,
h. Abtransportieren des besprühten bzw. vorvernetzten Rohreifens,
i. Wiederholung der Schritte a) bis h) mit weiteren Rohreifen.

Gemäß der Erfindung ist daher vorgesehen, Rohreifen außerhalb der Behandlungskammer auf Paletten aufzuspannen, wobei pro Palette je ein Rohreifen aufgespannt wird, und die Palette nachfolgend in eine Behandlungskammer eingebracht wird. Durch die speziellen Spanneinrichtungen der Paletten befindet sich der oben liegende Wulstbereich der Rohreifen unabhängig von der jeweiligen Reifendimension immer in derselben Höhe. Die Rohreifen sind daher an ihren oberen Wulstbereichen "hängend" auf den Paletten aufgespannt. Vorteilhafterweise ist es dadurch gestattet, unterschiedlich dimensionierte Reifen in gleichem Ausmaß mittels der Hubeinrichtung, d.h. mit übereinstimmendem Hub, anzuheben und derart an die Greifeinrichtung zu übergeben. Sämtlich in der Behandlungskammer durchgeführte Bewegungsabläufe sind daher unabhängig von den Reifendimensionen, sodass durch die Erfindung die Bewegungsabläufe in der Behandlungskammer auf eine prozesssichere Weise umgesetzt sind. Insbesondere erfolgt in der Behandlungskammer eine sichere Übergabe des aufgespannten Rohreifens von der Palette an eine Greifeinrichtung. Die Behandlung der Rohreifen erfolgt daher, im Gegensatz zu den bisher bekannten Verfahren, auf eine reproduzierbare Weise. Außerdem ist eine visuelle Kontrolle der Bewegungsabläufe vorteilhafter Weise nicht erforderlich. Die Hubeinrichtung ermöglicht ferner einen konstruktiv einfachen Aufbau der in der Behandlungskammer befindlichen Greifeinrichtung, da ein Anheben und Absenken der Greifeinrichtung auf Grund der Hubeinrichtung nicht erforderlich sind.

Ist die Vorrichtung zur Elektronenstrahlbehandlung von Rohreifen vorgesehen, ist gemäß einer bevorzugten Ausführungsvariante die Behandlungskammer ein Strahlenschutzgehäuse, an welche eine Doppelschleuse und eine Ausgangsschleuse angrenzen, wobei die Doppelschleuse eine an das Strahlenschutzgehäuse angrenzende Eingangskammer und eine an das Strahlenschutzgehäuse angrenzende Ausgangskammer aufweist, wobei die umlaufende Förderereinrichtung von einem Bereich außerhalb des Strahlenschutzgehäuses über die Doppelschleuse in das Strahlenschutzgehäuse hineingeführt ist und wobei die Abtransporteinrichtung durch die Ausgangsschleuse durchgeführt ist. Die Doppelschleuse mit Eingangskammer und Ausgangkammer ermöglicht ein Einschleusen der Palette mit aufgespanntem Rohreifen und nach Abnahme des Rohreifens von der Palette ein Ausschleusen der leeren Palette, auf welche nachfolgend erneut ein weiterer Rohreifen aufgespannt wird. Die Paletten werden daher im Kreis geführt.

Bevorzugter Weise ist vor der Fördereinrichtung ein Zubringer zum Antransport der Rohreifen angeordnet, wobei insbesondere am bei der umlaufenden Fördereinrichtung liegenden Endbereich des Zubringers eine Zentriervorrichtung zum Ausrichten und in Form bringen der Rohreifen angeordnet ist. Dies trägt zu einem robusten und sicheren Fertigungsprozess bei.

Gemäß einer weiteren bevorzugten Ausführungsvariante ist die umlaufende Fördereinrichtung mehrteilig. Solche Fördereinrichtungen weisen eine kompakte Bauweise auf. In diesem Zusammenhang ist es Vorteil, wenn die Fördereinrichtung einen mehrteiligen in Draufsicht U-förmigen Außenförderer aufweist, welcher sich bei einer Vorrichtung zur Elektronenstrahlbehandlung vor der Doppelschleuse zwischen der Eingangskammer und der Ausgangskammer und bei einer Vorrichtung zur Sprühbehandlung vor der Behandlungskammer erstreckt. Ferner ist es in diesem Zusammenhang von Vorteil, wenn die Fördereinrichtung einen innerhalb der Behandlungskammer angeordneten, mehrteiligen und in Draufsicht U-förmigen Innenförderer aufweist.

Die auf den Paletten aufgespannten Rohreifen sind direkt von der umlaufenden Förderrichtung mittels der Hubeinrichtung zur Greifeinrichtung anhebbar, wenn die Hubeinrichtung unterhalb der Fördereinrichtung angeordnet ist.

Weitere Maßnahmen tragen dazu bei den Durchsatz zu erhöhen. In diesem Zusammenhang ist es von Vorteil, wenn beim Verfahren die Schritte f) und g) mit verschiedenen Rohreifen teilweise gleichzeitig ausgeführt werden. Ferner ist es von Vorteil, wenn mehrere der Schritte a) bis g) mit einer Anzahl von Paletten, insbesondere mit fünf bis zehn Paletten, parallel durchgeführt werden.

Werden Rohreifen einer Elektronenstrahlbehandlung mittels einer Elektronenstrahlquelle unterzogen, ist es hinsichtlich des Strahlenschutzes von Vorteil, wenn das Einbringen einer Palette gemäß Schritt b), der Rücktransport der leeren Palette gemäß Schritt f) und das Abtransportieren der Rohreifens gemäß Schritt h) über Schleusen erfolgt.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine schematische Draufsicht auf eine erfindungsgemäße Vorrichtung und
Fig. 2 eine Schnittdarstellung entlang der Linie II-II der Fig. 1.

Die Erfindung befasst sich mit einer Vorrichtung zur Bereitstellung von vorbehandelten, insbesondere durch Elektronenstrahlen vorvernetzten oder mit Trennmittel besprühten, Rohreifen.

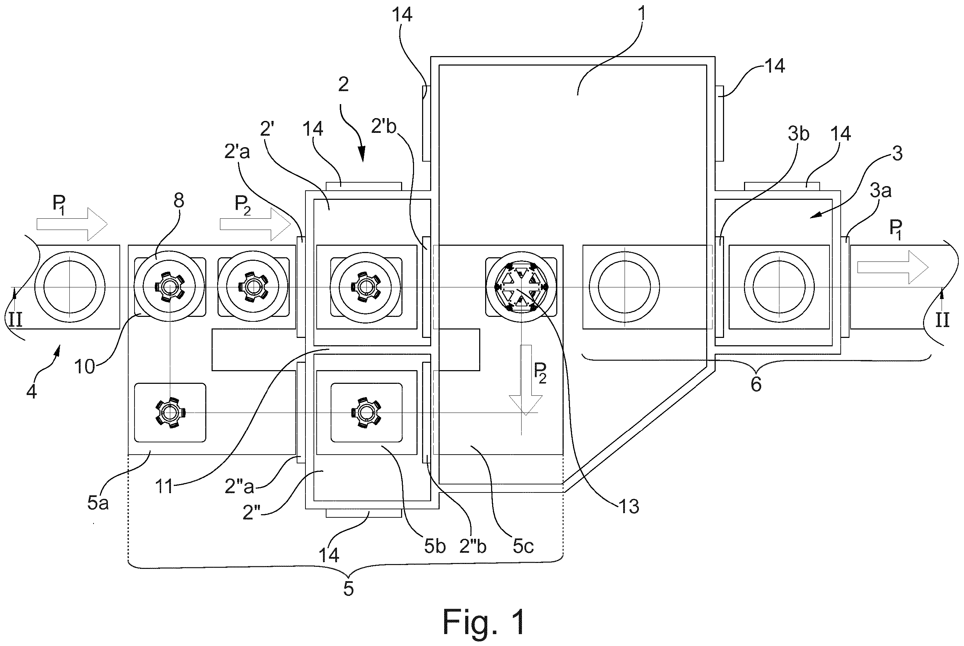

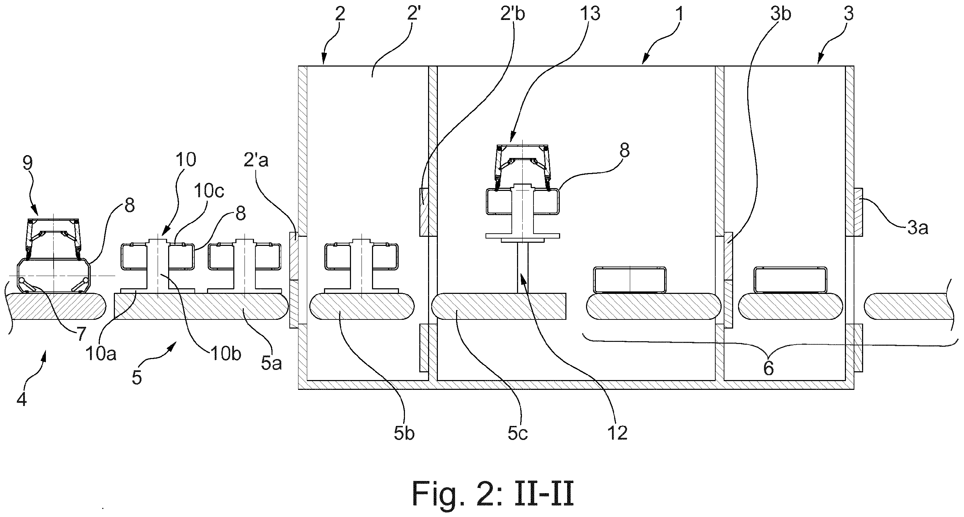

Fig. 1 und Fig. 2 zeigen jeweils eine Behandlungskammer 1, eine Doppelschleuse 2, eine Ausgangsschleuse 3, einen Teilbereich eines Zubringers 4, eine Fördereinrichtung 5 und eine Abtransporteinrichtung 6. Die Transportrichtung des Zubringers 4 und der Abtransporteinrichtung 6 entspricht der Transportrichtung der Rohreifen und ist in Fig. 1 durch Pfeile P₁ gekennzeichnet. Wie noch genauer beschrieben wird, ist die Fördereinrichtung 5 für einen umlaufenden Transport vorgesehen, ihre Transportrichtung ist in Fig. 1 durch zwei Pfeile P₂ gekennzeichnet.

Die Behandlungskammer 1 enthält eine in den Figuren nicht gezeigte Sprüheinrichtung zum Besprühen der Rohreifen mit einem Trennmittel oder eine nicht gezeigte Elektronenstrahlquelle zur Vorvernetzung von aus zumindest einer Kautschukmischung bestehenden Reifenbauteilen. Ist eine Vorvernetzung der Rohreifen mit Elektronstrahlen vorgesehen, ist die Behandlungskammer 1 ein Strahlenschutzgehäuse.

Die Doppelschleuse 2 und die Ausgangsschleuse 3 schließen an gegenüberliegenden Seiten an die Behandlungskammer 1 an. Wie Fig. 1 zeigt, weist die Doppelschleuse 2 eine Eingangskammer 2' und eine Ausgangskammer 2" auf, wobei die Eingangskammer 2' und die Ausgangskammer 2" durch eine Wand 11 voneinander getrennt sind und jeweils unmittelbar an die Behandlungskammer 1 angrenzen. Die Eingangskammer 2' und die Ausgangskammer 2" weisen jeweils ein äußeres Schleusentor 2'a, 2"a und zur Behandlungskammer 1 ein inneres Schleusentor 2'b, 2"b auf. Die Ausgangsschleuse 3 weist in bekannter Weise ein äußeres Schleusentor 3a und zur Behandlungskammer 1 ein inneres Schleusentor 3b auf.

Die Fördereinrichtung 5 reicht von einem Bereich außerhalb der Behandlungskammer 1 über die Doppelschleuse 2 in die Behandlungskammer 1 hinein. Ferner ist die Fördereinrichtung 5 mehrteilig ausgeführt, wobei sie einen Außenförderer 5a, zwei Schleusenförderer 5b und einen Innenförderer 5c umfasst. Der Außenförderer 5a ist außerhalb der Behandlungskammer 1 sowie unmittelbar vor der Doppelschleuse 2 angeordnet, ist ferner mehrteilig ausgeführt und erstreckt sich in Draufsicht U-förmig zwischen dem äußeren Schleusentor 2'a der Eingangskammer 2' und dem äußeren Schleusentor 2"a der Ausgangskammer 2". Der Innenförderer 5c befindet sich innerhalb der Behandlungskammer 1 sowie unmittelbar hinter den inneren Schleusentoren 2'b, 2"b, ist ferner mehrteilig ausgeführt und erstreckt sich in Draufsicht U-förmig zwischen dem inneren Schleusentor 2'b der Eingangskammer 2' und dem inneren Schleusentor 2"b der Ausgangskammer 2". Von den zwei Schleusenförderern 5b ist der eine in der Eingangskammer 2' und der andere in der Ausgangskammer 2" angeordnet. Entsprechend der bereits erwähnten umlaufenden Förderrichtung der Fördereinrichtung 5 ist die Förderrichtung des in der Eingangskammer 2' angeordneten Schleusenabschnittes 5b zur Förderrichtung des in der Ausgangskammer 2" befindlichen Schleusenabschnittes 5b entgegengesetzt.

Der Zubringer 4 ist bezogen auf die Transportrichtung der Rohreifen 8 vor der Fördereinrichtung 5 angeordnet und endet am Außenförderer 5a der Fördereinrichtung 5 auf der Höhe der Eingangskammer 2' der Doppelschleuse 2. Bevorzugter Weise ist der Zubringer 4 ein Rollenförderer, insbesondere mit zwei nebeneinander angeordneten Reihen aus einer Vielzahl jeweils parallel zueinander ausgerichteter Rollen. An dem beim Außenförderer 5a der Fördereinrichtung 5 liegenden Endbereich des Zubringers 2 ist eine zwischen den Rollenreihen bzw. den Rollen durchgeführte Zentriervorrichtung mit mindestens zwei, insbesondere vier, auseinanderfahrbaren Zentrierfingern 7 angeordnet (Fig. 2). Sind die Zentrierfinger 7 zusammengefahren, befinden sich diese unterhalb des Niveaus der Rollen, sodass ein am Zubringer 4 antransportierter Rohreifen 8 durch entsprechendes Anhalten des Zubringers 4 oberhalb der Zentriervorrichtung positioniert wird. Durch Auseinanderfahren der Zentrierfinger 7 werden die Rohreifen 8 nacheinander mittig am Zubringer 4 positioniert und ein etwaig zusammengefallener Rohreifen 8 wird dabei gleichzeitig in eine entsprechende Torusform gebracht. Von oberhalb des Zubringers 4 erfasst eine Handhabungseinheit 9 (Fig. 2) einer nicht gezeigten Greifeinrichtung die nacheinander am Zubringer 4 zentrierten Rohreifen 8, wobei die Rohreifen 8 jeweils innen am oben liegenden Wulstbereich erfasst werden. Der von der Handhabungseinheit 9 erfasste Rohreifen 8 wird von der Greifeinrichtung zur Fördereinrichtung 5 weiter transportiert und dort auf eine Palette 10 aufgespannt.

Von den Paletten 10 werden auf der Fördereinrichtung 5 mehrere, in Fig. 1 sechs, umlaufend im "Kreis" transportiert, wobei die Paletten 10 einzeln über die Eingangskammer 2' in die Behandlungskammer 1 eingeschleust und über die Ausgangskammer 2" aus der Behandlungskammer 1 wieder ausgeschleust werden.

Jede Palette 10 weist einen beim gezeigten Ausführungsbeispiel in Draufsicht im Wesentlichen rechteckigen Fuß 10a, einen auf diesem mittig angeordneten sich vertikal nach oben erstreckenden Träger 10b und eine am oberen Ende des Trägers 10b befindliche Spanneinrichtung 10c auf (Fig. 2). Mittels der Spanneinrichtungen 10c ist auf jeder Palette 10 ein Rohreifen 8 aufspannbar, wobei vorzugsweise jede Spanneinrichtung 10c Rohreifen 8 über einen gewissen Zollgrößenbereich, beispielsweise von 13 Zoll bis 18 Zoll, von größer 18 Zoll bis 21 Zoll und von größer 21 Zoll bis 24 Zoll, erfassen kann. Die Spanneinrichtungen 10c erfassen die Rohreifen 8 dabei jeweils an der Innenseite des oben liegenden Wulstbereiches. Die auf den Paletten 10 aufgespannten Rohreifen 8 werden nacheinander durch entsprechendes Öffnen und Schließen der Schleusentore 2'a, 2'b über die Eingangskammer 2' in die Behandlungskammer 1 eingeschleust.

Wie Fig. 1 gemeinsam mit Fig. 2 zeigt, ist in der Behandlungskammer 1 hinter dem inneren Schleusentor 2'b der Eingangskammer 2' am Innenförderer 5, insbesondere unterhalb des Innenförderers 5c, eine vorzugsweise einen Pneumatikzylinder umfassende Hubeinrichtung 12 angeordnet. Die nacheinander über die Eingangskammer 2' eingeschleusten Paletten 10 mit aufgespannten Rohreifen 8 werden mittels einer beim Innenabschnitt 5c angeordneten in den Figuren nicht gezeigten Anschlagstelle gegenüber der Hubeinrichtung 12 ausgerichtet. Wie in Fig. 2 angedeutet, werden die ausgerichteten Paletten 10 nacheinander von der Hubeinrichtung 12 angehoben, wobei der Hub immer gleich groß ist. Mittels einer beispielsweise an der Decke der Behandlungskammer 1 angeordneten, zumindest eine Handhabungseinheit 13 aufweisenden weiteren nicht gezeigten verfahrbaren Greifeinrichtung wird der auf der angehobenen Palette 10 aufgespannte Rohreifen 8 abgenommen, wobei die Handhabungseinheit 13 den Rohreifen 8 innen am oben liegenden Wulstbereich erfasst. Die Handhabungseinheit 13 bzw. die jeweilige Handhabungseinheit 13 wird vor Anheben der Palette 10 gegenüber dieser entsprechend ausgerichtet, d.h. oberhalb der Palette 10 positioniert. Vorteilhafter Weise können die Greifarme konstruktiv einfach gestaltet sein, denn ein Anheben und ein Absenken der Greifarme ist nicht erforderlich, da die Hubeinrichtung 12 vorgesehen ist. Die in der Behandlungskammer 1 befindliche Greifeinrichtung weist vorzugsweise mehrere sternförmig zueinander angeordnete Greifarme mit je einer Handhabungseinheit 13 auf. Diese Greifeinrichtung wird entsprechend schrittweise gedreht. Die in Fig. 1 gezeigte Behandlungskammer 1 weist eine an eine derartige Greifeinrichtung angepasste Bauweise auf.

Unmittelbar nach der Abnahme des jeweiligen Rohreifens 8 von seiner Palette 10, wird die Hubeinrichtung 12 mit der leeren Palette 10 abgesenkt und die leere Palette 10 auf dem Innenabschnitt 5c der Fördereinrichtung 5 abgesetzt. Die leere Palette 10 wird auf den Schleusenabschnitt 5b in der Ausgangskammer 2" und von dort auf den Außenabschnitt 5a der Fördereinrichtung 5 zurücktransportiert. Gleichzeitig wird der von der Handhabungseinheit 13 erfasste Rohreifen 8 vor die Sprüheinrichtung bzw. vor die Elektronenstrahlquelle transportiert, in Rotationsbewegung versetzt sowie nach erfolgter Besprühung bzw. Bestrahlung zur Abtransporteinrichtung 6 gebracht und anschließend auf dieser durch entsprechendes Betätigen der Handhabungseinheit 13 abgeladen, insbesondere abgeworfen, und von dieser über die Ausgangsschleuse 3 abtransportiert.

Während des gesamten Verfahrens werden die Schleusentore 2'a, 2'b, 2"a, 2"b, 3a, 3b derart verfahren, dass die Behandlungskammer 1 zur Außenumgebung abgeschottet ist. Es ist daher jeweils immer zumindest eines der beiden Schleusentore der Ausgangsschleuse 3, der Eingangskammer 2' und der Ausgangskammer 2" geschlossen. Auf den auf der Fördereinrichtung 5 im Kreis geführten Paletten 10 werden vorzugsweise fortlaufend vom Zubringer 4 antransportierte Rohreifen 9 auf die beschriebene Weise aufgespannt und die Rohreifen 8 nachfolgend entsprechend behandelt.

Bei der gezeigten Ausführungsvariante ist an der Eingangskammer 2', an der Ausgangskammer 2" sowie an der Ausgangsschleuse 3 seitlich jeweils eine mit einem Tor 14 verschließbare Wartungsöffnung vorgesehen. Die Bestrahlungskammer 1 weist zwei jeweils mit einem Tor 14 verschließbare Wartungsöffnungen auf, welche einander gegenüberliegen und zur Doppelschleuse 2 bzw. zur Ausgangsschleuse 3 benachbart sind.

Ist ein Besprühen der Rohreifen mit einem Trennmittel vorgesehen, kann auf die Doppelschleuse 2 und die Ausgangsschleuse 3 verzichtet werden.

Ein vollautomatischer Ablauf des erfindungsgemäßen Verfahrens ist durch eine entsprechende Rechnersteuerung sichergestellt. Die dazu erforderliche Hard- und Software sind nicht Gegenstand der Erfindung.

### Bezugszeichenliste

- 1: Behandlungskammer
- 2: Doppelschleuse
- 2': Eingangskammer
- 2'a: äußeres Schleusentor
- 2'b: inneres Schleusentor
- 2": Ausgangskammer
- 2"a: äußeres Schleusentor
- 2"b: inneres Schleusentor
- 3: Ausgangsschleuse
- 3a: äußeres Schleusentor
- 3b: inneres Schleusentor
- 4: Zubringer
- 5: Fördereinrichtung
- 5a: Außenabschnitt
- 5b: Schleusenabschnitt
- 5c: Innenabschnitt
- 6: Abtransporteinrichtung
- 7: Zentrierfinger
- 8: Rohreifen
- 9: Handhabungseinheit
- 10: Palette
- 10a: Fuß
- 10b: Träger
- 10c: Spanneinrichtung
- 11: Wand
- 12: Hubeinrichtung
- 13: Handhabungseinheit
- 14: Tor
- P₁, P₂: Pfeil

## Patentansprüche

1. Vorrichtung zur Sprühbehandlung oder Elektronenstrahlbehandlung von Rohreifen (8) umfassend:
- eine Behandlungskammer (1) mit einer Sprüheinrichtung oder einer Elektronenstrahlquelle,
- eine umlaufende Fördereinrichtung (5) zum Einbringen von auf Paletten (10) waagrecht aufgespannten Rohreifen (8) in die Behandlungskammer (1) und zum Rücktransport von leeren Paletten (10), wobei jede Palette (10) eine Spanneinrichtung (10c) aufweist, mittels welcher Rohreifen (8) unterschiedlicher Reifendimensionen in übereinstimmenden Höhenpositionen gegenüber der Palette (10) an der Innenseite ihrer oben liegenden Wulstbereiche erfassbar sind,
- eine Abtransporteinrichtung (6) zum Abtransport behandelter Rohreifen (8) aus der Behandlungskammer (1),
- eine in der Behandlungskammer (1) angeordnete Hubeinrichtung (12) zum Anheben und nachfolgendem Absenken der Paletten (10), **dadurch gekennzeichnet dass**
- eine in der Behandlungskammer (1) angeordnete Greifeinrichtung mit zumindest einer Handhabungseinheit (13), mittels welcher ein auf einer angehobenen Palette (10) aufgespannter Rohreifen (8) an der Innenseite seines oben liegenden Wulstbereiches erfassbar und derart von den Paletten (10) abnehmbar ist und mittels welcher nachfolgend der Rohreifen (8) in Rotationsbewegung versetzbar, vor eine Sprüheinrichtung bzw. eine Elektronenstrahlquelle bringbar und nach der Besprühung bzw. Bestrahlung auf die Abtransporteinrichtung (6) absetzbar ist.

2. Vorrichtung zur Elektronenstrahlbehandlung von Rohreifen (8) nach Anspruch 1 **dadurch gekennzeichnet, dass**
die Behandlungskammer (1) ein Strahlenschutzgehäuse ist, an welche eine Doppelschleuse (2) und eine Ausgangsschleuse (3) angrenzen,
wobei die Doppelschleuse (2) eine an das Strahlenschutzgehäuse angrenzende Eingangskammer (2') und eine an das Strahlenschutzgehäuse angrenzende Ausgangskammer (2") aufweist,
wobei die umlaufende Förderereinrichtung (5) von einem Bereich außerhalb des Strahlenschutzgehäuses über die Doppelschleuse (2) in das Strahlenschutzgehäuse (1) hineingeführt ist und
wobei die Abtransporteinrichtung (6) durch die Ausgangsschleuse (3) durchgeführt ist.

3. Vorrichtung nach Anspruch 1 oder 2, **dadurch gekennzeichnet, dass** vor der Fördereinrichtung (5) ein Zubringer (4) zum Antransport der Rohreifen (8) angeordnet ist.

4. Vorrichtung nach Anspruch 3, **dadurch gekennzeichnet, dass** am bei der umlaufenden Fördereinrichtung (5) liegenden Endbereich des Zubringers (4) eine Zentriervorrichtung zum Ausrichten und in Form bringen der Rohreifen (8) angeordnet ist.

5. Vorrichtung nach einem der Ansprüche 1 bis 4, **dadurch gekennzeichnet, dass** die umlaufende Fördereinrichtung (5) mehrteilig ist.

6. Vorrichtung nach Anspruch 5, **dadurch gekennzeichnet, dass** die Fördereinrichtung (5) einen mehrteiligen in Draufsicht U-förmigen Außenförderer (5a) aufweist, welcher sich bei einer Vorrichtung zur Elektronenstrahlbehandlung vor der Doppelschleuse (2) zwischen der Eingangskammer (2') und der Ausgangskammer (2') und bei einer Vorrichtung zur Sprühbehandlung vor der Behandlungskammer (1) erstreckt.

7. Vorrichtung nach Anspruch 5 oder 6, **dadurch gekennzeichnet, dass** die Fördereinrichtung (5) einen innerhalb der Behandlungskammer (1) angeordneten, mehrteiligen und in Draufsicht U-förmigen Innenförderer (5c) aufweist.

8. Vorrichtung nach einem der Ansprüche 1 bis 7 **dadurch gekennzeichnet, dass** die Hubeinrichtung (12) unterhalb der Fördereinrichtung (5) angeordnet ist.

9. Verfahren zur Sprühbehandlung mittels einer Sprüheinrichtung oder zur Elektronenstrahlbehandlung mittels einer Elektronenstrahlquelle von Rohreifen (8) mit folgenden nacheinander ablaufenden Schritten:
a. Bereitstellen einer Vorrichtung nach Anspruch 1,
b. Aufspannen eines Rohreifens (8) auf einer Palette (10) derart, dass der Rohreifen (8) unabhängig von seiner Reifendimension in einer definierten Höhenpositionen gegenüber der Palette (10) an der Innenseite seines oben liegenden Wulstbereiches erfasst wird,
c. Einbringen der Palette (10) mit einem aufgespannten Rohreifen (8) in eine Behandlungskammer (1),
d. Anheben der Palette (10) mit einer Hubeinrichtung (13),
e. Abnehmen des Rohreifens (8) von der angehobenen Palette (10) mit einer Greifeinrichtung, von welcher der Rohreifen (8) an der Innenseite seines oben liegenden Wulstbereiches erfasst wird,
f. Absenken der Hubeinrichtung (13) und Absetzen der leeren Palette (10) sowie Verfahren der Greifeinrichtung mitsamt dem Rohreifen (8) vor die Sprüheinrichtung bzw. die Elektronenstrahlquelle, wobei der Rohreifen (8) in Rotationsbewegung versetzt wird,
g. Besprühen bzw. Bestrahlen des rotierenden Rohreifens (16) und Rücktransport der leeren Palette (10),
h. Abladen des besprühten bzw. vorvernetzten Rohreifens (8) von der Greifeinrichtung auf eine Abtransporteinrichtung (6),
i. Abtransportieren des besprühten bzw. vorvernetzten Rohreifens (8),
j. Wiederholung der Schritte a) bis h) mit weiteren Rohreifen.

10. Verfahren nach Anspruch 9, **dadurch gekennzeichnet, dass** die Schritte f) und g) mit verschiedenen Rohreifen teilweise gleichzeitig ausgeführt werden.

11. Verfahren nach Anspruch 9 oder 10, **dadurch gekennzeichnet, dass** mehrere der Schritte a) bis g) mit einer Anzahl von Paletten (10), insbesondere mit fünf bis zehn Paletten (10), parallel durchgeführt werden.

12. Verfahren zur Elektronenstrahlbehandlung mittels einer Elektronenstrahlquelle nach einem der Ansprüche 10 bis 11, **dadurch gekennzeichnet, dass** das Einbringen einer Palette (10) gemäß Schritt b), der Rücktransport der leeren Palette (10) gemäß Schritt f) und das Abtransportieren der Rohreifens gemäß Schritt h) über Schleusen erfolgt.

## Claims

1. Device for the spray treatment or electron beam treatment of green tyres (8), comprising:
- a treatment chamber (1) with a spraying device or an electron beam source,
- a circulating conveying device (5) for introducing green tyres (8), mounted horizontally on pallets (10), into the treatment chamber (1) and for the return transport of empty pallets (10), wherein each pallet (10) has a clamping device (10c), by means of which green tyres (8) of different tyre dimensions can be grasped at the same height positions with respect to the pallet (10) on the inner side of their upwardly lying bead regions,
- a transporting-away device (6) for transporting away treated green tyres (8) out of the treatment chamber (1),
- a lifting device (12), arranged in the treatment chamber (1), for raising and subsequently lowering the pallets (10), **characterized in that**
- a gripping device, arranged in the treatment chamber (1), with at least one handling unit (13), by means of which a green tyre (8) mounted on a raised pallet (10) can be grasped on the inner side of its upwardly lying bead region and can be removed in such a way from the pallets (10) and by means of which the green tyre (8) can subsequently be set in rotational motion, can be brought in front of a spraying device or an electron beam source and, after being sprayed or irradiated, can be set down onto the transporting-away device (6).

2. Device for the electron beam treatment of green tyres (8) according to Claim 1, **characterized in that** the treatment chamber (1) is a radiation protection housing, which is adjoined by a double lock (2) and an output lock (3),
wherein the double lock (2) has an input chamber (2'), adjoining the radiation protection housing, and an output chamber (2"), adjoining the radiation protection housing,
wherein the circulating conveying device (5) is led from a region outside the radiation protection housing via the double lock (2) into the radiation protection housing (1) and
wherein the transporting-away device (6) is led through the output lock (3).

3. Device according to Claim 1 or 2, **characterized in that** a feeder (4) for the incoming transport of the green tyres (8) is arranged in front of the conveying device (5).

4. Device according to Claim 3, **characterized in that** a centring device for aligning the green tyres (8) and bringing them into shape is arranged at the end region of the feeder (4) lying at the circulating conveying device (5).

5. Device according to one of Claims 1 to 4, **characterized in that** the circulating conveying device (5) is of a multi-part form.

6. Device according to Claim 5, **characterized in that** the conveying device (5) is a multi-part outer conveyor (5a), which is U-shaped in plan view and, in the case of a device for electron beam treatment, extends in front of the double lock (2) between the input chamber (2') and the output chamber (2') and, in the case of a device for spray treatment, extends in front of the treatment chamber (1).

7. Device according to Claim 5 or 6, **characterized in that** the conveying device (5) has a multi-part inner conveyor (5c), which is U-shaped in plan view and is arranged within the treatment chamber (1).

8. Device according to one of Claims 1 to 7, **characterized in that** the lifting device (12) is arranged underneath the conveying device (5).

9. Method for the spray treatment by means of a spraying device and/or for the electron beam treatment by means of an electron beam source of green tyres (8), comprising the following successive steps:
a. providing a device according to Claim 1,
b. mounting a green tyre (8) on a pallet (10) in such a way that, independently of its tyre dimension, the green tyre (8) is grasped in a defined height position with respect to the pallet (10) on the inner side of its upwardly lying bead region,
c. introducing the pallet (10) with a mounted green tyre (8) into a treatment chamber (1),
d. raising the pallet (10) with a lifting device (13),
e. removing the green tyre (8) from the raised pallet (10) with a gripping device, by which the green tyre (8) is grasped on the inner side of its upwardly lying bead region,
f. lowering the lifting device (13) and setting down the empty pallet (10) and also moving the gripping device together with the green tyre (8) in front of the spraying device or the electron beam source, wherein the green tyre (8) is set in rotational motion,
g. spraying or irradiating the rotating green tyre (16) and return transport of the empty pallet (10),
h. unloading the sprayed or pre-crosslinked green tyre (8) from the gripping device onto a transporting-away device (6),
i. transporting away the sprayed or pre-crosslinked green tyre (8),
j. repeating steps a) to h) with further green tyres.

10. Method according to Claim 9, **characterized in that** steps f) and g) are performed partly at the same time with different green tyres.

11. Method according to Claim 9 or 10, **characterized in that** several of steps a) to g) are carried out in parallel with a number of pallets (10), in particular with five to ten pallets (10).

12. Method for electron beam treatment by means of an electron beam source according to either of Claims 10 and 11, **characterized in that** the introduction of a pallet (10) according to step b), the return transport of the empty pallet (10) according to step f) and the transporting away of the green tyre according to step h) take place via locks.

## Revendications

1. Dispositif de traitement de pneumatiques bruts (8) par pulvérisation ou par faisceau d'électrons, ledit dispositif comprenant :
- une chambre de traitement (1) comportant un moyen de pulvérisation ou une source de faisceau d'électrons,
- un moyen de transport rotatif (5) destiné à introduire des pneumatiques bruts (8), serrés horizontalement sur des palettes (10), dans la chambre de traitement (1) et à ramener des palettes vides (10), chaque palette (10) comportant un moyen de serrage (10c) permettant de saisir les pneumatiques bruts (8) de différentes dimensions dans des positions en hauteur correspondantes par rapport à la palette (10) du côté intérieur de leurs zones de talon situées en haut,
- un moyen de retrait (6) destiné à retirer les pneumatiques bruts (8) traités de la chambre de traitement (1),
- un moyen de levage (12) disposé dans la chambre de traitement (1) et destiné à soulever puis abaisser les palettes (10), **caractérisé en ce que**
- un moyen de préhension disposé dans la chambre de traitement (1) et comportant au moins une unité de manutention (13) et permettant de saisir un pneumatique brut (8), serré sur une palette (10) soulevée, du côté intérieur de sa zone de talon située en haut et de le retirer ainsi des palettes (10) et permettant de déplacer ensuite le pneumatique brut (8) suivant un mouvement de rotation, de l'amener devant un moyen de pulvérisation ou une source de faisceau d'électrons et de le déposer sur le moyen de retrait (6) après la pulvérisation ou l'exposition au faisceau.

2. Dispositif de traitement de pneumatiques bruts (8) par faisceau d'électrons selon la revendication 1, **caractérisé en ce que**
la chambre de traitement (1) est un boîtier de protection contre les faisceaux, auquel un double sas (2) et un sas de sortie (3) sont adjacents, le double sas (2) comportant une chambre d'entrée (2') adjacente au boîtier de protection contre les faisceaux et une chambre de sortie (2") adjacente au boîtier de protection contre les faisceaux,
le moyen de transport rotatif (5) étant amené dans le boîtier de protection contre les faisceaux (1) depuis une zone, située à l'extérieur du boîtier de protection contre les faisceaux, par le biais du double sas (2),
et
le moyen de retrait (6) étant effectué par le biais du sas de sortie (3).

3. Dispositif selon la revendication 1 ou 2, **caractérisé en ce qu'**un alimentateur (4) destiné à amener les pneumatiques bruts (8) est disposé devant le moyen de transport (5).

4. Dispositif selon la revendication 3, **caractérisé en ce qu'**un dispositif de centrage destiné à orienter et mettre en forme les pneumatiques bruts (8) est disposé au niveau de la zone d'extrémité de l'alimentateur (4) située dans le moyen de transport rotatif (5).

5. Dispositif selon l'une des revendications 1 à 4, **caractérisé en ce que** le moyen de transport rotatif (5) est en plusieurs parties.

6. Dispositif selon la revendication 5, **caractérisé en ce que** le moyen de transport (5) comporte un transporteur extérieur (5a) en plusieurs parties ayant une forme de U en vue de dessus, lequel est situé devant le double sas (2) entre la chambre d'entrée (2') et la chambre de sortie (2') dans le cas d'un dispositif de traitement par faisceau d'électrons et s'étend devant la chambre de traitement (1) dans le cas d'un dispositif de traitement par pulvérisation.

7. Dispositif selon la revendication 5 ou 6, **caractérisé en ce que** le moyen de transport (5) comporte un transporteur intérieur (5c) en plusieurs parties ayant une forme de U dans une vue de dessus, lequel est disposé à l'intérieur de la chambre de traitement (1).

8. Dispositif selon l'une des revendications 1 à 7, **caractérisé en ce que** le moyen de levage (12) est disposé au-dessous du moyen de transport (5).

9. Procédé de traitement de pneumatiques bruts (8) par pulvérisation à l'aide d'un moyen de pulvérisation ou de traitement par faisceau d'électrons à l'aide d'une source de faisceau d'électrons, le procédé comprenant les étapes successives suivantes :
a. fournir un dispositif selon la revendication 1,
b. serrer un pneumatique brut (8) sur une palette (10) de façon à saisir le pneumatique brut (8) indépendamment de sa dimension dans une position en hauteur définie par rapport à la palette (10) du côté intérieur de sa zone de talon située en haut,
c. introduire la palette (10) munie d'un pneumatique brut (8) serré dans une chambre de traitement (1),
d. soulever la palette (10) à l'aide d'un moyen de levage (13),
e. retirer le pneumatique brut (8) de la palette soulevée (10) à l'aide d'un dispositif de préhension permettant de saisir le pneumatique brut (8) sur le côté intérieur de sa zone de talon située en haut,
f. abaisser le moyen de levage (13) et déposer la palette vide (10) et déplacer le moyen de préhension muni du pneumatique brut (8) devant le moyen de pulvérisation ou la source de faisceau d'électrons, le pneumatique brut (8) étant mis en rotation,
g. pulvériser ou exposer à un faisceau le pneumatique brut (16) en rotation et ramener la palette vide (10),
h. retirer le pneumatique brut (8) soumis à la pulvérisation ou pré-réticulé du moyen de préhension pour le placer sur un moyen de retrait (6),
i. retirer le pneumatique brut (8) soumis à la pulvérisation ou pré-réticulé,
j. répéter les étapes a) à h) avec d'autres pneumatiques bruts.

10. Procédé selon la revendication 9, **caractérisé en ce que** les étapes f) et g) sont partiellement réalisées simultanément avec différents pneumatiques bruts.

11. Procédé selon la revendication 9 ou 10, **caractérisé en ce que** plusieurs des étapes a) à g) sont réalisées en parallèle avec plusieurs palettes (10), notamment avec cinq à dix palettes (10).

12. Procédé de traitement par faisceau d'électrons à l'aide d'une source de faisceau d'électrons selon l'une des revendications 10 à 11, **caractérisé en ce que** les opérations de mise en place d'une palette (10) selon l'étape b), de retour de la palette vide (10) selon l'étape f) et de retrait du pneumatique brut selon l'étape h) sont effectuées par le biais de sas.
